# EUROPEAN PATENT SPECIFICATION

(11) **EP 2 164 656 B1**
(45) Date of publication and mention of the grant of the patent: **24.07.2013**
(21) Application number: 08734299.4
(22) Date of filing: 03.04.2008
(51) Int. Cl.: B22F 1/00, B22F 1/02, B22F 9/30, B09C 1/00, C02F 1/00

(54) **THE METHOD OF SYNTHESIS OF THE IRON NANOPOWDER WITH THE PROTECTIVE OXIDIC COAT FROM NATURAL AND SYNTHETIC NANOPOWDERED IRON OXIDES AND OXIHYDROXIDES**
VERFAHREN ZUR SYNTHESE EINES EISENNANOPULVERS MIT EINER OXIDISCHEN SCHUTZSCHICHT AUS NATÜRLICHEN UND SYNTHETISCHEN NANOPULVER-EISENOXIDEN UND OXIHYDROXIDEN
PROCÉDÉ DE SYNTHÈSE DE NANOPOUDRE DE FER AVEC UN ENROBAGE D'OXYDE PROTECTEUR PROVENANT D'OXYDES ET D'OXYHYDROXYDES DE FER NANOPULVÉRULENTS NATURELS ET SYNTHÉTIQUES

(30) Priority: 12.04.2007 CZ 20070255
(43) Date of publication of application: 24.03.2010
(73) Proprietor: Univerzita palackeho V Olomouci, 71744 Olomouc (CZ)
(72) Inventor: ZBORIL, Radek, 779 00 Olomouc (CZ); SCHNEEWEISS, Oldrich, 625 00 Brno (CZ); FILIP, Jan, 78301 Olomouc (CZ); MASLAN, Miroslav, 78346 Tesetice (CZ)
(74) Representative: Kendereski, Dusan
(86) International application number: PCT/CZ2008/000040
(87) International publication number: WO 2008/125068

(56) References cited:
- EP-A- 0 232 246
- WO-A-2004/001019
- US-A1- 2006 113 255
- BRIDGER K ET AL: "MAGNETIC CHARACTERISTICS OF ULTRAFINE FE PARTICLES REDUCED FROM UNIFORM IRON OXIDE PARTICLES" JOURNAL OF APPLIED PHYSICS, AMERICAN INSTITUTE OF PHYSICS. NEW YORK, US, vol. 61, no. 8, 15 April 1987 (1987-04-15), pages 3323-3325, XP008072271 ISSN: 0021-8979
- 'NANOVED 2006 - NENAMAT Programme', [Online] May 2006, International Conferences Advances in Nanostructured Materials, Processing - Microstructure-Properties Retrieved from the Internet: <URL:http://www.imr.saske.sk/umv/confer/nan oved/progr.htm> [retrieved on 2010-11-30]

## Description

### Field of the Invention

The present invention relates to the method of preparation of the iron nanopowder by the reduction of the nanopowdered crystalline or amorphous precursor of the iron oxides and oxihydroxides with the dimension of particles smaller than 20 nm in the reduction atmosphere.

### State of the Art

For the synthesis of iron nanopowder, many ways are used, for example sonochemical, photochemical or precipitation ways or methods of hydrothermal and thermal decompositions as they are described in the literature. Metal nanoparticles smaller than 100 nm have an extreme ability to oxidize. In the form of powder, metal nanoparticles are pyrophoric, which leads to their spontaneous burning on encountering airy oxide. Self-burning of nanopowdered metal particles can be prevented by their passivation, i.e. creating protective coat on their surface. In the patent CS 237 319 82 (Schrey G., Danninger H., Jangg G.: Zp 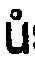 sob výroby 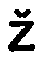 elezných prá 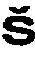 k 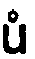 z jemného voln 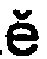 sypaného prá 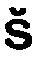 kového oxidu 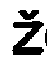 elezitého ), there is described production of iron powders, usable in powder metallurgy, by the reduction of freely strewn porous powder ferric oxide via freely agitate reduction gases, usually hydrogen, at temperatures between 1200 and 1400°C. Properties of powders prepared with this technology are dominantly shaped by the grain-size of the initial material, temperature and reduction period. Considering only the usage of high temperatures, it is impossible to obtain the final iron powder grain-size smaller than tens of micrometers. Another way of synthesis of metal nanoparticles using thermal decomposition of the mixture of two or more metallic salts and a passivation agent at the temperatures higher than the melting point of used metallic salts is described in the patent US 6,974,492 B2 (A. Harutyunyan, L. Grigorian, T. Tokune: Method for synthesis of metal nanoparticles). By this method, metal nanoparticles in the size of units and tens of nanometers are obtained. By the duration of thermal analysis it is possible to control the size of final metal nanoparticles. Preparation of metal powder nanoparticles based on reduction of the initial metallic salts using a suitable reduction agent in a suitable solution of passivation agent is described in the patent US 2003/0190475 A1 (E. Carpenter, V. Hartus: Magnetic nanoparticles having passived metalloid cores). Another method using reduction of the solution of the initial salt of the appropriate metal by a suitable reduction agent at a suitable high temperature for synthesis of metal nanoparticles is described in the patent WO 2005/118184 A3 (H. Ting, Z. Chuan-Jian, et al.: Metal and alloy nanoparticles and synthesis methods thereof). Another way of preparation of metal nanoparticles with protective passivation oxidic coat is based on mechanical milling of the initial metals with subsequent etching by milling the obtained powder in the solution into the required particle size (WO 2005/013337 A3, P. Dutta: Rapid generation of nanoparticles from bulk solids at room temperature). Stable colloid of dispersed zero-valent iron nanoparticles in water is possible to prepare by milling micrometer-sized iron particles in the presence of adequate passivation agent. This way allows the preparation of colloid of iron nanoparticles of the size smaller than 100 nm (US 2005/0199556 A1. W. Zhang: Disperse zero-valent iron colloids). The US patent proposal 2006/0151398 A1, (M. Uegami, J. Kawano, et al. : Iron composite particles for purifying soil or ground water, process for producing the same, purifying agent containing the same, process for producing the purifying agent and method for purifying soil or ground water) contains the description of creation iron nanoparticles intended for purification soil and ground water. Iron nanoparticles have also been prepared by the thermal reduction of goethite or hematite particles of the size between 50 nm and 500 nm in the temperatures between 350 and 600 °C. After cooling, the particles are transferred into water, so that a protective oxidic passivation coat is formed on their surface. This coat is formed in water environment and after drying, iron nanoparticles sized between 50 nm and 500 nm with protective oxidic coat, dominantly formed of Fe₃O₄, are obtained. The disadvantage of this method of iron nanoparticle synthesis is that the protective coat, preventing the particles from self-burning, is formed by Fe₃O₄, which results in certain limitations in practical utilization of these iron nanoparticles, for example for reduction purification of water. Iron nanoparticles, prepared In this way, have lower reduction ability in spite of the same size.

Document US 2006/113255 discloses a method for production of iron nanoparticles having an iron oxide protective coating. The particles are produced by thermal decomposition of iron oxide or iron oxihydroxide precursors having a size of 50 nm in hydrogen atmosphere.

As described above, none of the mentioned ways, used for the synthesis of iron nanoparticle nanopowders, utilize nanoparticles with particle size smaller than 20 nm of natural or synthetic ferrihydrite for the preparation of iron nanoparticles with the protective FeO coat.

### Summary of the invention

The aim of this invention is to provide a method enabling processing crystalline and amorphous iron oxides and oxihydroxides nanoparticles of the size smaller than 20 nm into iron nanoparticles with protective FeO coat preventing them from self-burning.

The above mentioned aim is reached via the way of preparation of nanopowdered iron with the protective iron oxide coat by the reduction of nanopowdered crystalline or amorphous precursor of iron oxihydroxides in the reduction atmosphere, wherein in the course of synchronous exhaust of secondarily originating gas products, nanopowdered crystalline or amorphous iron oxihydroxide is thermally decomposed in the reduction atmosphere at the temperature higher than the minimum decomposition temperature for the given oxide or oxihydroxide and hereby formed nanopowdered iron with protective iron oxide coat is cooled in an inert atmosphere, when nitrogen, argon or another inert gas is selected as an inert atmosphere whereby the merits lie in the fact, that nanoparticles with particle size smaller than 20 nm of natural or synthetic ferrihydrite are used for the preparation of iron nanoparticles with the protective FeO coat.

For obtaining particles of the size smaller than 20 nm, it is advantageous to implement the modification of the precursor by drying or dehydration or recrystallization or homogenization or grinding or milling before the thermal decomposition.

For the way of preparation of nanopowdered iron with the protective iron oxide coat, it is advantageous if the precursor is selected from the group of natural and synthetic iron oxides and oxihydroxides.

For prevention against self-burning of nanopowdered iron with the protective iron oxide coat it is advantageous if the final product is stored in the inert gas atmosphere or in the suitable liquid after the finalization of the synthesis.

The main advantage of the method of preparation of nanopowdered iron with the protective iron oxide coat, for example FeO, according to this invention, is to achieve a new and higher effect due to the fact that this type of thermal decomposition represents a new way of synthesis of nanopowdered iron with the particle-size in the dimension of tens or hundreds of nanometers, in the course of which self-burning is prevented and required chemical purity and size distribution of particles is reached.

Another indispensable advantage of the method according to this invention is that the protective FeO coat, which forms on the surface of iron nanoparticles, ensures their long-term chemical stability in airy environment, which results in easy manipulation with iron nanoparticles during both their application and their long-term storage.

### Brief Description of the Figures on Drawings

The way of preparation of nanopowdered iron with the protective FeO coat by the reduction of nanopowdered crystalline or amorphous precursor of iron oxides and oxihydroxides in the reduction atmosphere according to this invention will be explained more closely with the help of a drawing, on which figure 1 represents the X-ray diffraction pattern of the initial ferrihydrite, figure 2 is TEM images of the initial natural ferrihydrite , figure 3 depicts the X-ray diffraction pattern of the final nanopowdered iron with the protective FeO coat , figure 4 displays Mössbauer spectrum of the final nanopartical iron with the protective coat and figure 5 is TEM image of the final nanopartical iron with the protective FeO coat.

### Examples of the implementation of the invention

The way of preparation of the nanopowdered iron with the protective iron oxide coat by the reduction of nanopowdered crystalline or amorphous precursor of iron oxides and oxihydroxides in the reduction atmosphere according to the invention will be explained with the help of a useful example of the preparation of the iron nanopowder with the protective FeO coat.

For the preparation of the iron nanopowder with the protective FeO coat by the thermal decomposition in the reduction atmosphere, a nanopowder iron oxide or oxihydroxide is selected as the precursor. Subsequently, the precursor is dried in the dehydrating furnace before the reduction. Dried precursor is set into a suitable container, for example porcelain bowl, and then placed into the reduction furnace securing both stability of the selected reaction temperature for the whole synthesis period and the supply of the reduction gas as well as exhaust of gas products. The synthesis temperature is 650 °C or higher. The reaction temperature value then influences the size distribution of product particles. Synthesis of the precursor proceeds in a selected reaction temperature for a selected reaction period, the length of which influences the degree of the precursor conversion and simultaneously co-designates the size distribution of the final nanopowdered iron particles with the protective FeO coat. The synthesis itself is terminated by gradual lowering of the temperature and substitution of the reduction gas for inert gas, which cools the final product. After cooling, the final product is transferred into a container with inert gas or with a suitable liquid in a way that prevents self-burning of the nanopowdered iron.

As an illustrative example of verification of practical results of the proposed invention, preparation of iron nanopowder from natural ferrihydrite nanopowder by thermal analysis in hydrogen reduction atmosphere is presented.

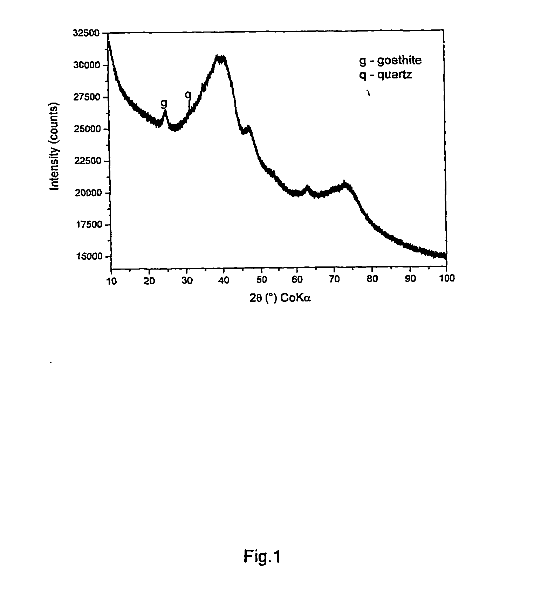

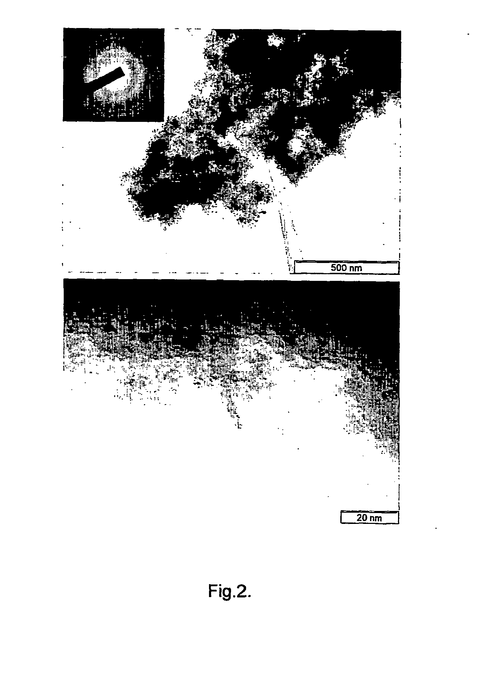

Chemical composition, structural constitution and particle size of the initial material were identified with the methods of X-ray diffraction analysis (XRD), transmission electron microscopy (TEM) and chemical element analysis. X-ray diffraction analysis pattern is illustrated in figure 1 and it demonstrates the nanoparticle character of the initial ferrihydrite and imperceptible admixtures of goethite and quartz. Simultaneously, transmission electron microscopy shows that the particle size is smaller than 10 nm as visible from figure 2. Chemical element composition is presented in table 1 and it shows that as trace elements silicone, calcium and aluminium are present.

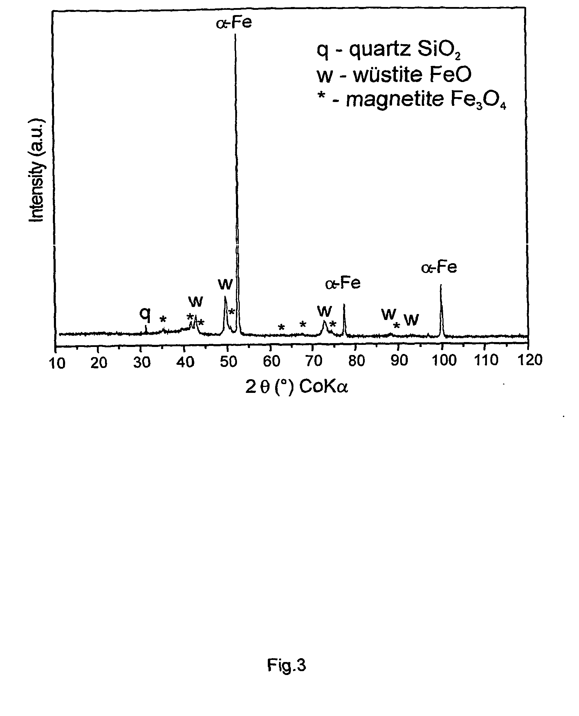

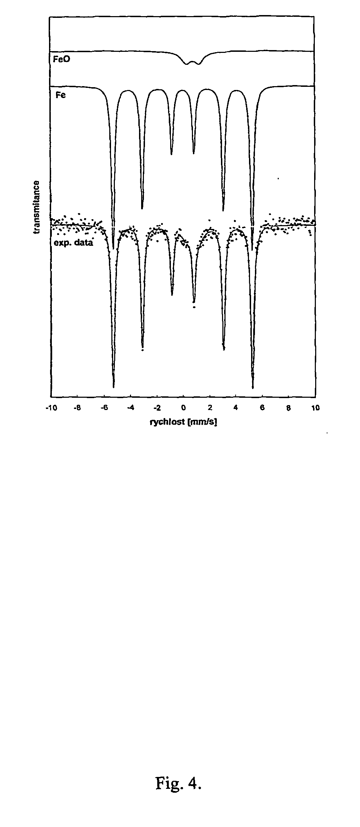

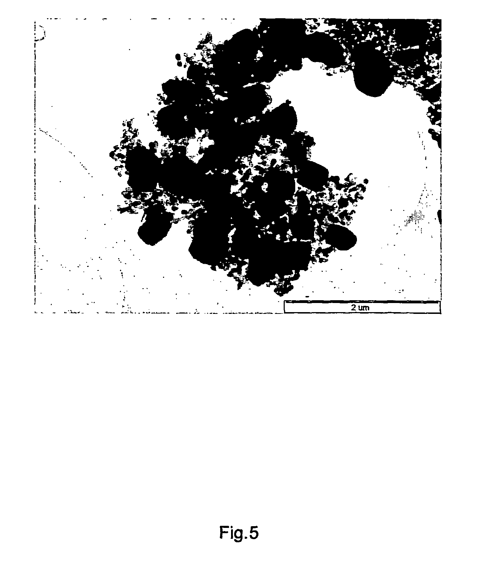

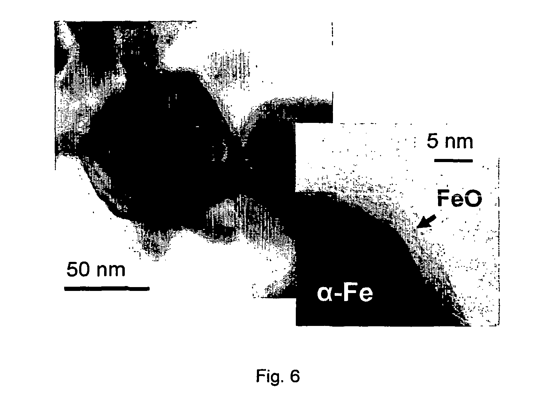

Chemical and structural composition and the size of the synthesized product particles were analyzed with the methods of X-ray diffraction analysis (XRD), Mössbauer spectroscopy on ⁵⁷Fe and transmission electron microscopy (TEM). X-ray diffraction analysis shows that the final product dominantly consists of pure iron, as visible from figure 3. The X-ray diffraction pattern further shows that minority amount of wustite and trace amount of quartz (the same amount as in the initial material) is present in the final product. Mössbauer spectrum measured in the room temperature, as illustrated in figure 4, consists of a sextet with hyperfine parameters of pure α-iron (IS=0 mm/s, QS=0 mm/s, B=33 T) and a minority doublet corresponding with wustite (IS=0.77 mm/s, QS=0.99 mm/s). The particle size of the final iron nanopowder is evident from TEM image (see figure 5), the particle size is c. 300 - 400 nm. In figure 6, the protective FeO coat is visible on the surface of iron particles.

### Industrial Applicability

The method of preparation of the nanoparticle iron with the protective FeO coat according to the invention is advantageously usable in the production of nanosized iron used in the surface and ground water purification and in soil purification. The invention is also usable for purifying water for industrial use.

## Claims

1. The method of preparation of nanopowdered iron with the protective iron oxide coat by the reduction of nanopowdered crystalline or amorphous precursor of iron oxihydroxides in the reduction atmosphere, wherein in the course of synchronous exhaust of secondarily originating gas products, nanopowdered crystalline or amorphous iron oxihydroxide is thermally decomposed in the reduction atmosphere at temperature higher than the minimum decomposition temperature for the given oxihydroxide and hereby formed nanopowdered iron with the protective iron oxide coat is cooled in an inert atmosphere, in the process of which nitrogen, argon or another inert gas is selected as the inert atmosphere **characterized by** the fact that nanoparticles with particle size smaller than 20 nm of natural or synthetic ferrihydrite are used for the preparation of iron nanoparticles with the protective FeO coat.

## Patentansprüche

1. Vorboreitungsart vom nanopulvesiertem Eisen mit Eisentriexidschutzschircht durch Reduktion von einer nanopulverisierten kristallinen oder amorphen Vorstufe der Eisen-Oxyhydroxide in einer Reduktionsatmosphäre, wobei während der synchronen Absaugung der sekundär entstehenden Gasprodukte das nanopulverisierte kristalline oder amorphe Eisen-Oxyhydroxid In einer Reduktionsatmosphäre bei höherer Temperatur als der Mindestzersetzungstemperatur des jeweiligen Oxyhydroxides thermisch zersetzt wird, und auf dieser Weise hergestelltes nanopulverisiertes Eisen mit Eisenoxidschutzschicht in einer inerten Atmosphäre im Verfahren abgekühlt wird, in welchem Stickstoff, Argon oder ein anderes inertes Gas als inerte Atmosphäre gewählt wird, **dadurch gekennzeichnet, dass** zur Vorbereitung der Eisen-Nanopartikel mit FeO-Schutzschicht die Nanopartikel mit der Partikelgröße kleiner als 20 nm vom Natur- oder synthetischen Ferrihydrit verwendet werden.

## Revendications

1. Procédé de préparation du fer nanopoudre avec la couche de protection de l'oxyde ferrique par la réduction du cristallin nanopoudre ou amorphe précurseur des oxyhydroxydes de fer en atmosphère de réduction, où durant l'aspiration synchrone des produits gazeux se forment secondairement, cristallin nanopoudre ou amorphe des oxyhydroxydes de fer est décomposé de façon thermique en atmosphère de réduction à la température supérieure à la température minimale de la décomposition de l'oxyhydroxyde donné et le fer nanopoudre avec la couche de protection de l'oxyde femque ainsi formé est refroidi en atmosphère inerte dans le processus auquel il y a l'azote, l'argon ou un autre gaz inerte choisi comme l'atmosphère inerte, **caractérisée par le fait que** les nanoparticules avec la taille des particules inférieure à 20 nm du ferrihydrite naturel ou synthétique sont utilisées pour la préparation des nanoparticules du fer avec la couche de protection de l'oxyde ferrique.
